Europäisches Patentamt

European Patent Office (11) Numéro de publication: **0 150 637**

Office européen des brevets **B1**

(12) **FASCICULE DE BREVET EUROPEEN**

(19)

(45) Date de publication du fascicule du brevet:
**19.11.87**

(21) Numéro de dépôt: **84402379.6**

(22) Date de dépôt: **21.11.84**

(51) Int. Cl.⁴: **F 21 Q 1/00,** B 60 Q 1/26

(54) **Dispositif de signalisation multiple, notamment pour véhicule automobile.**

(30) Priorité: **31.01.84 FR 8401499**

(43) Date de publication de la demande:
**07.08.85 Bulletin 85/32**

(45) Mention de la délivrance du brevet:
**19.11.87 Bulletin 87/47**

(84) Etats contractants désignés:
**DE GB IT**

(56) Documents cités:
**FR - A - 2 447 515**
**US - A - 1 656 687**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Robert, Christian, 24 Promenade M. Gorki, F-78500 Sartrouville (FR)**

(74) Mandataire: **Moncheny, Michel et al, c/o Cabinet Lavoix 2 Place d'Estienne d'Orves, F-75441 Paris Cedex 09 (FR)**

## Description

La présente invention est relative aux dispositifs regroupant, à l'arrière d'un véhicule automobile, divers feux de signalisation, tels qu'un feu de position, un indicateur de freinage, un clignotant de changement de direction, un feu anti-brouillard, etc. ainsi qu'un catadioptre.

Ces dispositifs sont avantageusement encastrés dans une partie renfoncée d'un élément de carrosserie tel qu'un panneau arrière du véhicule et sont du type comprenant un élément extérieur transparent ou translucide recouvrant ladite partie renfoncée et un support commun solidaire de cloisons perpendiculaires à l'élément extérieur et délimitant avec ce dernier des chambres dans chacune desquelles est disposée une lampe portée par ledit support.

Dans une disposition connue, la partie renfoncée présentant une forme générale rectangulaire de grande longueur, les lampes sont alignées, ainsi que les chambres, suivant la direction de la grande longueur, et le support s'étend suivant cette même direction le long d'un côté de la partie renfoncée et est réalisé en matière plastique d'un seul tenant avec un cadre entourant l'élément extérieur (vitre) et en appui étanche contre le pourtour de la partie renfoncée. Cette disposition s'évère relativement pesante et coûteuse à cause du cadre nécessaire pour rigidifier l'ensemble de grande longueur, et encombrante notamment à cause du catadioptre dont la surface s'ajute en longueur à celle des feux lumineux.

On connaît également d'après le document US-A-1 656 687 un dispositif de signalisation comprenant un boîtier fixé sur un montant de carrosserie et dont les deux faces avant et arrière sont constituées par les parois transparentes ou translucides. Ce boîtier est séparé en plusieurs compartiments par une platine et par des cloisons disposées de part et d'autre de cette platine, des lampes portées par la platine étant logées dans chacun de ces compartiments.

Un tel agencement ne convient pas pour être encastré sur un panneau de carrosserie.

L'invention vise à réaliser un dispositif de signalisation du type défini ci-dessus qui soit compact, résistant et de bas prix de revient tout en ayant un bon aspect extérieur.

Selon l'invention, le support comprend une platine qui s'étend sensiblement perpendiculairement à l'élément extérieur et sur les deux faces de laquelle sont disposées les cloisons et les lampes, cette platine comporte deux parois sensiblement parallèles, à partir desquelles s'étendent les cloisons et l'élément extérieur est fixé par soudage sur la partie adjacent des deux parois de la platine et comporte un bord périphérique en appui étanche contre le pourtour du panneau de carrosserie du véhicule.

Selon d'autres caractéristiques aventageuses de l'invention:

— contre la face extérieure de l'élément extérieur et au droit de sa zone de jonction avec la platine, est appliqué et fixé un catadioptre de forme allongée recouvrant ladite zone;

— l'élément extérieur comporte dans ladite zone une dépression dans laquelle est logé le catadioptre,
la face extérieure de celui-ci affleurant sensiblement celle de l'élément extérieur;

— des éléments diffuseurs éventuellement colorés interposés chacun entre une lampe et l'élément extérieur sont maintenus appliqués contre des saillies de la platine et des cloisons;

— la platine est prolongée, à son extrémité tournée vers le panneau de carrosserie, par deux languettes élastiques latérales ou autre moyen de fixation coopérant avec des évidements prévus sur ce panneau;

— un connecteur électrique multiple, relié aux lampes par des conducteurs disposés entre les deux parois de la platine, est fixé à l'extrémité de celle-ci tournée vers le panneau et est engagé dans un logement approprié de ce panneau.

Un exemple de réalisation d'un dispositif de signalisation selon l'invention est décrit ci-après, avec référence aux dessins annexés, sur lesquels:

la Fig. 1 est une vue en perspective du dispositif avant montage sur véhicule;

la Fig. 2 est une vue en coupe par un plan vertical longitudinal du dispositif monté sur véhicule.

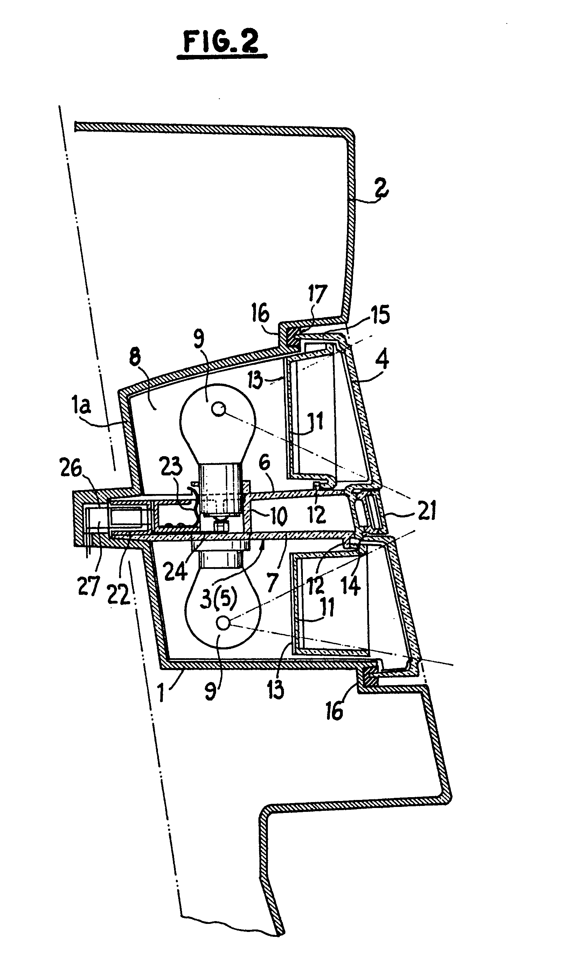

On voit sur la Fig. 2, encastré dans une partie renfoncée 1 d'un panneau arrière 2 d'un véhicule, un dispositif de signalisation comportant principalement un support de lampes 3 et un élément extérieur ou vitre 4 qui recouvre la partie renfoncée 1. Le support 3, réalisé en matière plastique, comprend une platine médiane 5 à deux parois 6, 7 légèrement espacées, à peu près horizontales et perpendiculaires à la vitre 4, et des cloisons verticales 8 venues de matière avec la platine 5 et s'étendant à peu près perpendiculairement au fond 1$^a$ du renfoncement 1 et à la vitre 4. La platine 5, les cloisons 8, le fond 1$^a$ et la vitre 4, délimitent plusieurs chambres contenant chacune une lampe 9 à douille, classiquement engagée et fixée dans un manchon 10 traversant la platine et réalisé monopièce avec celle-ci. Entre chaque lampe et la vitre est disposé un diffuseur transparent éventuellement coloré 11, en appui sur des saillies 12, 13 de la platine 5 et des cloisons 8.

La vitre 4, de préférence en verre fumé translucide, comporte sur toute sa largeur et au niveau de la platine 5, une dépression 14 de section à peu près rectangulaire et dont la hauteur est légèrement plus grande que l'épaisseur de la platine, et elle est fixée è celle-ci par soudage de ladite dépression contre l'extrémité adjacente des parois 6, 7. La vitre comporte un bord périphérique 15 rabattu vers l'avant, maintenu en appui sur le pourtour 16 de la partie 1, avec interposition d'un joint d'étanchéité 17, par fixation du support 3 dans la partie renfoncée 1.

A cet effet, la platine est prolongée vers l'avant, à chacune des deux extrémités latérales de sa face avant 18, soit par une languette 19 accrochée dans un évidement approprié non représenté de la partie 1 du panneau 2, soit par une tige filetée 20 insérée partiellement dans la platine, traversant par un trou le fond de la partie 1 et coopérant avec un écrou prenant appui sur la face avant de ce fond.

Dans la dépression 14, est logé un catadioptre 21 en forme de bande transversale. Il est fixé par soudage sur le fond de la dépression, et sa face extérieure affleure celle de la vitre.

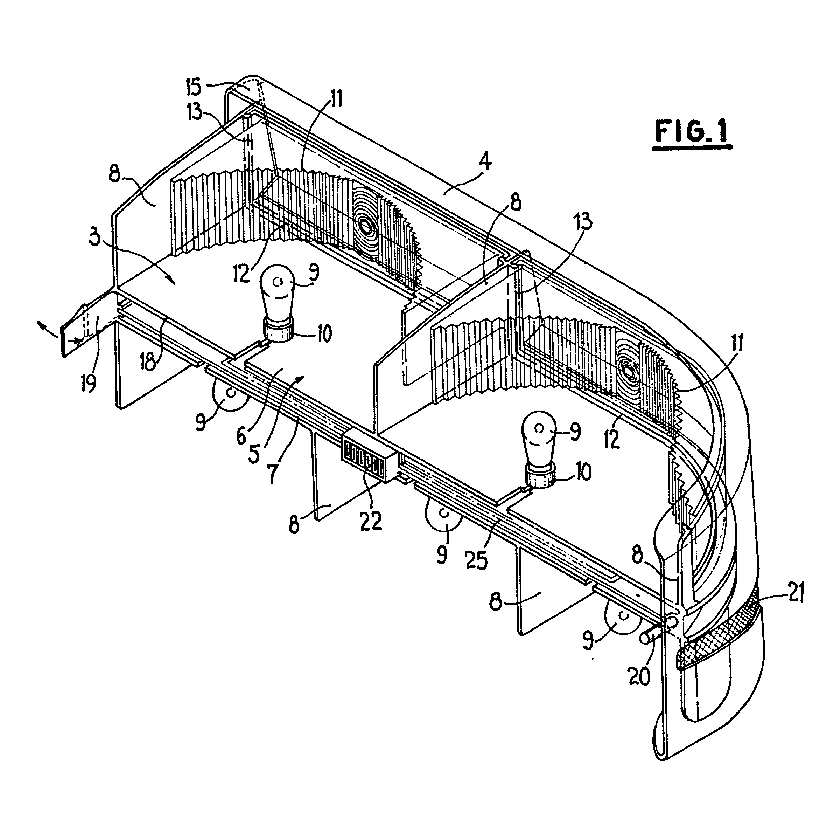

Entre les deux parois 6, 7 et au centre de la face avant 18 de la platine est disposé et maintenu par soudage un connecteur multiple 22 relié aux lampes par des conducteurs 23, 24 comme indiqué à la Fig. 2, ou par circuit imprimé sur une plaque isolante 25 venue de matière avec le boîtier du connecteur et situé, comme visible à la Fig. 1, entre les deux parois 6, 7. Le boîtier du connecteur 22 est engagé dans un logement approprié 26 pratiqué dans le fond de la partie 1, ce logement contenant des fiches 27 agencées pour être accouplées au connecteur 22 par translation horizontale de la platine lors de la mise en place du dispositif, cette mise en place étant facilitée par la forme légèrement trapézoïdale du boîtier du connecteur 22 et du logement 26.

Le dispositif décrit ci-dessus s'avère peu encombrant et peu coûteaux, notamment du fait de l'absence de cadre entourant la vitre, la rigidité de l'ensemble étant procurée par la platine formant une poutre centrale renforcée des deux côtés par les cloisons, et le montage sur véhicule s'effectuant très facilement et rapidement, en particulier en ce qui concerne le branchement électrique. Par ailleurs, le catadioptre cache la zone de jonction, risquant de présenter des défauts de fabrication, entre la vitre et la platine tout en soulignant la séparation entre les feux situés de part et d'autre de la platine.

En variante, au lieu d'être tranversale comme indiqué ci-dessus, la platine peut être disposée verticalement les feux étant alors répartis à droite et à gauche d'une zone médiane verticale de la vitre. De plus, celle-ci peut être remplacée par un élément extérieur réalisé en un matériau plastique translucide ou transparent.

## Revendications

1. Dispositif de signalisation multiple, notamment pour véhicule automobile, du type comprendant un rapport (3) agencé pour être fixé sur une partie renfoncée (1) d'un panneau (2) de carrosserie de véhicule et un élément extérieur (4) transparent ou translucide, le support (3) étant solidaire de cloisons (8) sensiblement perpendiculaires à l'élément extérieur (4), et délimitant avec lesdites cloisons (8) et ledit élément extérieur (4) plusieurs chambres dans chacune desquelles est disposée une lampe (9) portée par le support, caractérisé en ce que le support comprend une platine (5) qui s'étend sensiblement perpendiculairement à l'élément extérieur (4) et sur les deux faces de laquelle sont disposées les cloisons (8) et les lampes (9), cette platine comporte deux parois (6, 7) sensiblement parallèles, à partir desquelles s'étendent les cloisons (8), et l'élément extérieur (4) est fixé par soudage sur la partie adjacente des deux parois (6, 7) de la platine (5) et comporte un bord périphérique (15) en appui étanche contre le pourtour de la partie renfoncée (16) du panneau de carrosserie du véhicule.

2. Dispositif suivant la revendication 1, caractérisé en ce que contre la face extérieure de l'élément extérieur (4) et au droit de sa zone de jonction avec la platine (5), est appliqué et fixé un catadioptre (21) de forme allongée recouvrant ladite zone.

3. Dispositif selon la revendication 2, caractérisé en ce que l'élément extérieur (4) comporte dans ladite zone une dépression (14) dans laquelle est logé le catadioptre, la face extérieure de celui-ci affleurant sensiblement celle de l'élément extérieur.

4. Dispositif suivant l'une quelconque des revendications 1 à 3, caractérisé en ce que des éléments diffuseurs (11) éventuellement colorés, interposés chacun entre une lampe (9) et l'élément extérieur (4) sont maintenus appliqués contre des saillies (12, 13) de la platine (9) et des cloisons (8).

5. Dispositif suivant l'une quelconque des revendications 1 à 4, caractérisé en ce que la platine (5) est prolongée à son extrémite tournée vers le panneau de carrosserie, par deux languettes élastiques latérales (19) ou autre moyen de fixation (20), coopérant avec des évidements ou autres moyens complémentaires prévus sur ce panneau.

6. Dispositif suivant l'une quelconque des revendications 1 à 5, caractérisé en ce qu'un connecteur éléctrique multiple (22), relié aux lampes (9) par des conducteurs (23, 24) disposés entre les deux parois (6, 7) de la platine (5), est fixé à l'extrémité de celle-ci tournée vers le panneau et est engagé dans un logement approprié (26) de ce panneau.

## Patentanprüche

1. Mehrfachsignalvorrichtung, insbesondere für Kraftfahrzeuge, welche einen zur Anbringung auf einem zurückgesetzten Abschnitt (1) einer Wand (2) der Fahrzeugkarosserie eingerichteten Träger (3) und ein durchsichtinges oder durchscheinendes äusseres Teil (4) umfasst, wobei der Träger (3) mit zu dem äusseren Teil (4) im wesentlichen senkrechten Trennwänden (8) fest verbunden ist und mit diesen Trennwänden (8) und dem äusseren Teil (4) mehrere Kammern bestimmt, in welchen jeweils eine auf dem Träger sitzende Lampe (9) angeordnet ist, dadurch gekennzeichnet, dass der Träger eine Tragplatte (5) umfasst, die sich im wesentlichen senkrecht zu dem äusseren Teil (4) erstreckt und auf deren beiden Seiten die Trennwände (8) und die Lampen (9) angeordnet sind, diese Tragplatte zwei im wesentlichen parallele Wände (6, 7) aufweist, von denen sich die Trennwände (8) erstrecken, und das äussere Teil (4) an dem angrenzenden Abschnitt der beiden Wände (6, 7) der Tragplatte (5) durch Schweissung befestigt ist und eine Umfangskante (15) aufweist, die dicht am äusseren Umfang des zurückgesetzten Abschnitts (16) der Wand der Fahrzeugkarosserie anliegt.

2. Vorrichtung nach Anspruch 1, dadurch gekennzeichnet, dass an der Aussenseite des äusseren Teils (4) und senkrecht zu seinem Verbindungsbereich zur Tragplatte (5) ein diesen Bereich abdeckender langgestreckter Rückstrahler (21) angelegt und befestigt ist.

3. Vorrichtung nach Anspruch 2, dadurch gekennzeichnet, dass das äussere Teil (4) in diesem Bereich eine Einsenkung (14) aufweist, in welcher der Rückstrahler aufgenommen ist, wobei die Aussenfläche des Rückstrahlers mit der des äusseren Teils im wesentlichen fluchtet.

4. Vorrichtung nach irgendeinem der Ansprüche 1 bis 3, dadurch gekennzeichnet, dass, gegebenenfalls farbige, Streuscheibenelemente (11), welche jeweils zwischen einer Lampe (9) und dem äusseren Teil (4) eingefügt sind, gegen Vorsprünge (12, 13) der Tragplatte (9) und der Trennwände (8) anliegend gehalten werden.

5. Vorrichtung nach irgendeinem der Ansprüche 1 bis 4, dadurch gekennzeichnet, dass die Tragplatte (5) an ihrem zur Karosseriewand gerichteten Rand sich in zwei seitlichen elastischen Zungen (19) oder anderen Befestigungsmitteln (20) fortsetzt, welche mit an dieser Wand vorgesehenen Ausnehmungen oder anderen komplementären Mitteln zusammenwirken.

6. Vorrichtung nach irgendeinem der Ansprüche 1 bis 5, dadurch gekennzeichnet, dass ein elektrischer Mehrfachstecker (2), welcher mit den Lampen (9) durch zwischen den beiden Wänden (6, 7) der Tragplatte (5) angeordnete Leiter (23, 24) verbunden ist, an dem zu der Karosseriewand gerichteten Rand der Tragplatte befestigt und in eine geeignete Aufnahme (26) dieser Karosseriewand eingestekt ist.

**Claims**

1. A multiple signalisation device, in particular for an automobile vehicle, of the type comprising a support (3) adapted to be fixed on a reinforced part (1) of a panel (2) of the body of the vehicle and a transparent or translucent outer element (4), the support (3) being integral with partitions (8) substantially perpendicular to the outer element (4) and defining with said partitions (8) and said outer element (4) a plurality of chambers in each of which is disposed a lamp (9) carried by the support, characterised in that the support comprises a plate (5) which extends substantially in a direction perpendicular to the outer element (4) and on the two sides of which are disposed the partitions (8) and the lamps (9), this plate comprises two substantially parallel walls (6, 7) from which the partitions (8) extend, and the outer element (4) is fixed by welding on the adjacent parts of the two walls (6, 7) of the plate (5) and includes a peripheral edge (15) which bears in a sealed manner against the periphery of the reinforced part (16) of the panel of the body of the vehicle.

2. A device according to claim 1, characterised in that there is applied and fixed against the outer side of the outer element (4) and in the region of its zone of junction with the plate (5), a catadioptric element (21) of elongated shape covering said zone.

3. A device according to claim 2, characterised in that the outer element (4) has in said zone a recess (14) in which is housed the catadioptric element, the outer side of the latter being substantially flush with that of the outer element.

4. A devide according to any one of the claims 1 to 3, characterised in that diffuser elements (11) which may be coloured and are each interposed between a lamp (9) and the outer element (4), are maintained applied against projections (12, 13) on the plate (9) and on the partitions (8).

5. A devide according to any one of the claims 1 to 4, characterised in that the plate (5) is extended at its end facing the panel of the body by two lateral resilient strips (19), or other fixing means (20), which cooperate with cavities or other complementary means provided on this panel.

6. A devide according to any one of the claims 1 to 5, characterised in that a multiple electric connector (22), connected to the lamps (9) by conductors (23, 24) disposed between the two walls (6, 7) of the plate (5), is fixed to the end of the latter facing the panel and is engaged in a suitable housing (26) of this panel.

FIG.1

FIG.2